# EUROPEAN PATENT SPECIFICATION

(11) **EP 0 930 981 B1**
(45) Date of publication and mention of the grant of the patent: **23.10.2002**
(21) Application number: 97935952.8
(22) Date of filing: 18.08.1997
(51) Int. Cl.: B60K 25/06, B62D 5/30, F02B 67/04

(54) **DRIVING ARRANGEMENT FOR A SERVO PUMP AND A GEARBOX IN A VEHICLE**
ANTRIEBSVORRICHTUNG FÜR EINE SERVOPUMPE UND GETRIEBEGEHÄUSE IN EINEM FAHRZEUG
DISPOSITIF D'ENTRAINEMENT DESTINE A UNE SERVOPOMPE ET A UNE BOITE DE VITESSES DE VEHICULE

(30) Priority: 23.09.1996 SE 9603457
(43) Date of publication of application: 28.07.1999
(73) Proprietor: Volvo Lastvagnar AB, 405 08 Göteborg (SE)
(72) Inventor: JOHANNESSON, Stig-Erik, S-442 41 Kungälv (SE)
(74) Representative: Hellbom, Lars Olof
(86) International application number: SE9701358
(87) International publication number: WO98012064

(56) References cited:
- DE-C- 3 335 077
- US-A- 3 758 859
- US-A- 3 986 576
- US-A- 4 165 207

## Description

The present invention relates to a servo pump drive device for a vehicle, said device comprising a gear which is non-rotatably joined to a shaft mounted in a gearbox housing and which drives the servo pump through an opening in the gearbox housing. The invention also relates to a vehicle gearbox, comprising a shaft mounted in a gearbox housing, on which shaft a gear is non-rotatably mounted, said gear driving a vehicle servo pump through an opening in the gearbox housing.

In order to facilitate steering the wheels of a heavy vehicle such as a truck or a bus, power steering is used. If the power steering is hydraulic, the hydraulic pressure is provided by a servo pump which is driven by the vehicle engine. As a supplement to the servo pump, an emergency servo pump is provided which sees to it that the vehicle is always steerable whenever it is rolling.

It is previously known to drive the emergency servo pump by means of a gear which is arranged on the output shaft of the gearbox. In this known drive device, a number of components are required to i.a. fix the gear on the output shaft. This results in an undesirable increase in length of the gearbox in order to make room for the gear. It is also known to drive the emergency servo pump by means of belt drive from a pulley mounted on a companion flange on the output shaft of the vehicle gearbox. A disadvantage of belt drive is that the belt transmission takes up space and the drive belts become worn and aged, which results in lower reliability.

In order to measure the speed of a vehicle it is previously known to arrange a pulse wheel on the output shaft of the vehicle gearbox. The pulse wheel provides pulses to a tachometric sensor which sends signals by means of which the vehicle speed can be determined.

In document US-A-3 758 859 (preamble of claims 1 and 6) it is disclosed how to arrange a mangetic tachometer pickup into a fuel or oil pump housing. The tachometer pickup receives signals from a rotating helical gear which drives the pump.

The main purpose of the present invention is to achieve a drive device and a gearbox of the type described by way of introduction, which eliminate the above mentioned increase in length of the gearbox when a gear is used to drive an emergency servo pump.

Another purpose of the present invention is to reduce the number of components in a vehicle gearbox.

These purposes are achieved according to the invention by the features of claim 1 resp. claim 6.

By integrating a gear with an existing pulse wheel in the gearbox, a drive device is obtained which requires very little space in the gearbox. This means that the length of the gearbox does not need to be increased when a servo pump is to be coupled to the gearbox. This simplifies the installation of gearboxes by virtue of the fact that different gearbox variants with and without servo pumps will have the same installation length. The number of components in the gearbox will be reduced since the pulse wheel and the gear are integrated in a single component.

The invention will be described in more detail below with reference to an example shown in the accompanying drawings, where
- Fig. 1: shows a section through a portion of a gearbox on which a servo pump is mounted,
- Fig. 2: shows a section through a portion of the gearbox in Fig. 1, as seen from another angle with a tachometric sensor mounted in the gearbox housing,
- Fig. 3: shows a section through a drive device, and
- Fig. 4: shows a plan view of the drive device according to Fig. 3.

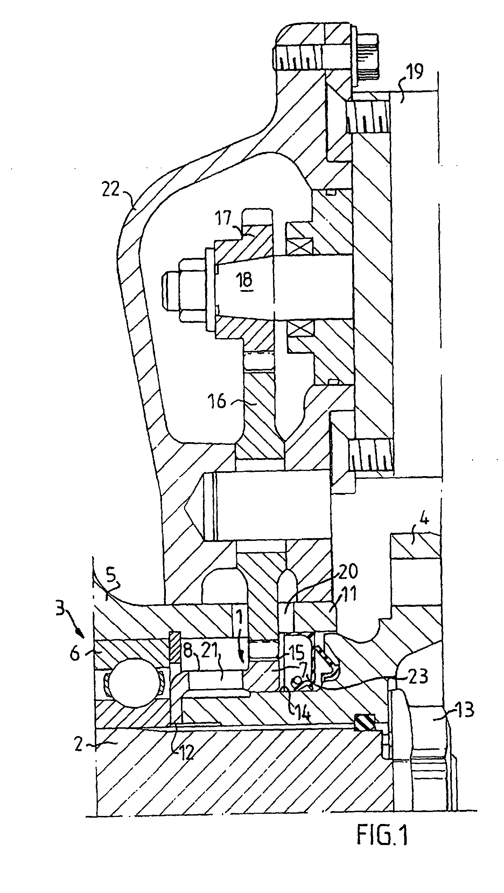

Fig. 1 shows a drive device 1, which is non-rotatably mounted on a shaft 2, which is preferably an output shaft 2 of a vehicle gearbox 3. A companion flange 4 is mounted at the end of the output shaft 2 and is designed to be bolted to the vehicle drive shaft (not shown). The gearbox 3 is enclosed by a gearbox housing 5, which together with the companion flange 4 and a bearing 6 for the shaft 2 forms a limited space for the drive device 1.

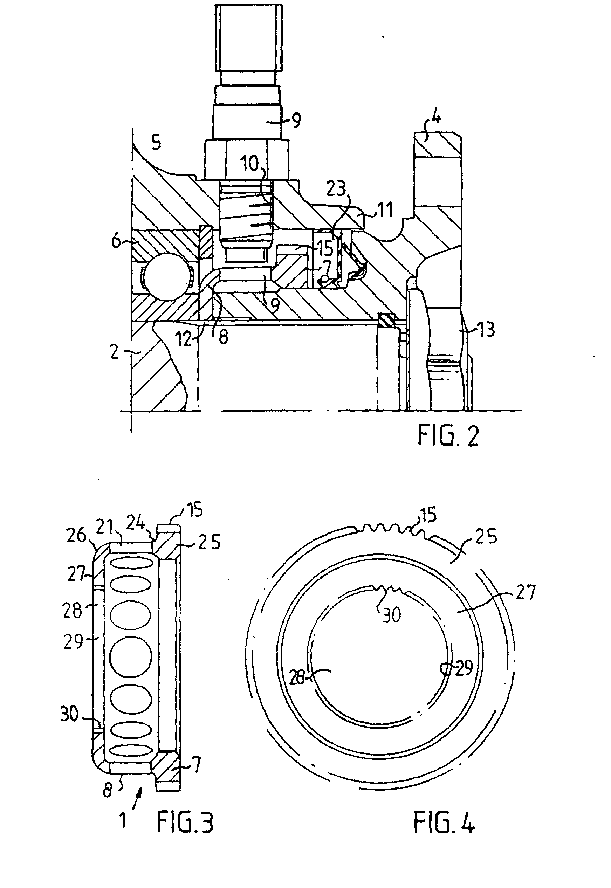

The drive device 1 comprises a gear 7, which is made integral with a pulse wheel 8. The pulse wheel 8 provides pulses to a tachometric sensor 9, which is arranged in a hole 10 in the wall 11 of the gearbox housing 5, as shown in Fig. 2. The drive device 1 is splined 12 on the shaft 2. The splines on the shaft 2 cooperating with the splines on the drive device 1 are also intended to cooperate with the splines on the companion flange 4. The drive device 1 is thus non-rotatably mounted via the spline joint 12 and is blocked axially at one end by the companion flange 4 and at the other end by the bearing 6 for the shaft 2 in the gearbox housing 5. The companion flange 4 is in turn locked axially by a nut 13 which is screwed onto the end of the shaft 2.

The drive device 1 partially abuts against a radial surface 14 of the companion flange 4. This means that the drive device 1 will partially surround the companion flange 4. By virtue of the fact that the drive device 1 abuts against the radial surface 14 of the companion flange 4, support will be provided for that portion of the drive device 1 which is provided with teeth 15. However, radial play between the drive device 1 and the companion flange 4 can be permitted and this gap can be closed when the teeth 15 are subjected to heavy loads.

The teeth 15 of the drive device engage a first gear 16, which engages in turn a second gear 17 which is mounted on the driving shaft end 18 of a servo pump 19. Alternatively, the teeth 15 of the drive device 1 can be in direct engagement with the second gear 17, which is mounted on the driving shaft end 18 of the servo pump. In order to permit the drive device I to engage the first gear 16, there is an opening 20 in a wall 11 of the gearbox housing 5. When the shaft 2 rotates, the servo pump 19 will be driven by means of the drive device 1, so that the servo pump 19 pumps hydraulic fluid to the vehicle power steering.

If the servo pump 19 is to be an emergency servo pump replacing the ordinary servo pump (in this case not shown) for the power steering system when the ordinary servo pump is not functioning, it is important that the drive device 1 be mounted on the output shaft 2 of the gearbox 3, since this shaft 2 will always rotate when the vehicle is moving. This means that the vehicle power steering will always function when the vehicle is rolling, regardless of whether or not the ordinary servo pump is functioning.

The pulse wheel has pulse-emitting means 21, which can consist of a series of holes along the periphery of the drive means 1. When the holes pass the tachometric sensor 9, it will register pulses, the frequency of which is proportional to the rotational speed of the drive device 1. The tachometric sensor 9 thus emits signals by which the vehicle speed can be determined.

The tooth engagement between the drive means 1 and the first gear 16 must be lubricated, and this is taken care of by the lubricating oil to be found in the gearbox 3. In order to prevent lubricant from leaking out from the gearbox housing 5, the opening 20 is surrounded by a cover 22 on the outside of the gearbox housing 5.
The cover 22 covers the first and the second gears 16,17 and acts as a mounting for the servo pump 19. A radial seal 23 presents lubricant from leaking out between the gearbox housing 5 and the companion flange 4 and seals against the radial surface 14 of the companion flange 4.

Figs. 3 and 4 show the drive device I, which comprises an essentially tubular portion 24 having a first end 25 and a second end 26. The area of the first end 24 has the gear 7 and the area between the ends 24,26 is the pulse wheel 8, the gear 7 being made in one piece with the pulse wheel 8. The teeth 15 of the gear 7 and the pulse-providing means 21 of the pulse wheel 8 are located on or in the outer periphery of the tubular portion 24. At the second end 26 of the tubular portion 24 there is a disc-shaped element 27 with a central through-hole 28 having a circumferential surface 29 provided with fastener means 30 which cooperate with corresponding fastener means on the shaft 2 on which the drive device 1 is to be mounted. The fastener means 30 are a splines joint 12 in the example, but other fastener means are conceivable.

According to the example shown in Figs. 1-4, the pulse-providing means 21 of the pulse wheel 8 and the teeth 15 of the gear 7 are located side-by-side on the periphery of the drive device 1. The pulse-providing means can instead be located on an axially directed surface of the drive device or be the teeth themselves. In the last mentioned alternative, the tachometric sensor 9 is placed above the teeth.

## Claims

1. Drive device for a servo pump (19) for a vehicle, said device comprising a gear (7), which is non-rotatably joined to a shaft (2) mounted in a gearbox housing (5) and which drives the servo pump (19) through an opening (20) in the gearbox housing (5), wherein the gear (7) is made integral with a pulse wheel (8), which provides pulses to a tachometric sensor (9), **characterized in that** the drive device (1) is arranged to partially surround a companion flange (4) mounted on the shaft (2).

2. Drive device according to Claim 1, **characterized in that** the shaft (2) is an output shaft in the gearbox housing (5).

3. Drive device according to one of Claims 1 or 2, **characterized in that** the pulse wheel (8) has pulse-providing means (21) which are disposed on the periphery of the drive means (1), and **in that** the gear (7) has teeth (15) which are located on the periphery of the drive device (1).

4. Drive device according to one of Claims 1-3, **characterized in that** the drive device (1) is joined to the shaft (2) by means of a splines joint (12) and abuts against a radial surface (14) of the companion flange (4) mounted on the shaft (2).

5. Drive device according to one of Claims 1-4, **characterized in that** the servo pump (19) is an emergency servo pump for steering the vehicle wheels.

6. Vehicle gearbox, comprising a shaft (2) mounted in a gearbox housing (5), on which shaft a gear (7) is non-rotatably mounted, said gear (7) via a tooth engagement (16, 17) driving a vehicle servo pump (19) through an opening (20) in the gearbox housing (5), wherein the gear (7) is made integral with a pulse wheel (8), forming a drive device (1), said pulse wheel (8) providing pulses to a tachometric sensor (9), **characterized in that** the drive device (1) is arranged to partially surround a companion flange (4) mounted on the shaft (2).

7. Gearbox according to Claim 6, **characterized in that** the shaft (2) is an output shaft in the gearbox housing (5).

8. Gearbox according to one of Claim 6 or 7, **characterized in that** the pulse wheel (8) has pulse-providing means (21) disposed on the periphery of the drive device (1) and **in that** the gear (7) has teeth (15) which are disposed on the periphery of the drive device (1).

9. Gearbox according to one of Claims 6-8, **characterized in that** the drive device (1) is joined to the shaft (2) by means of a splines joint (12) and abuts against a radial surface (14) of the companion flange (4) mounted on the shaft (2).

10. Gearbox according to one of Claims 6-9, **characterized in that** the servo pump (19) is an emergency servo pump for steering the vehicle wheels.

## Patentansprüche

1. Antriebsvorrichtung für eine Servopumpe (18) für ein Fahrzeug, wobei die Vorrichtung ein Zahnrad (7) aufweist, das nicht rotierbar mit einer Welle (2), die in einem Getriebegehäuse (3) montiert ist, verbunden ist, und das die Servopumpe (19) durch eine Öffnung in dem Getriebegehäuse (5) antreibt, worin das Zahnrad integral mit einem Impulsrad (8) hergestellt ist, das Impulse an einen tachometrischen Sensor (9) bereitstellt, **dadurch gekennzeichnet, dass** die Antriebsvorrichtung (1) angeordnet ist, um einen Gegenflansch (4), der auf der Welle (2) montiert ist, teilweise zu umgeben.

2. Antriebsvorrichtung nach Anspruch 1, **dadurch gekennzeichnet, dass** die Welle(2) eine Abtriebswelle in dem Getriebegehäuse (5) ist.

3. Antriebsvorrichtung nach einem der Ansprüche 1 oder 2, **dadurch gekennzeichnet, dass** das Impulsrad (8) Impuls bereitstellende Einrichtungen (21) besitzt, die auf der Peripherie der Antriebseinrichtung (1) angeordnet sind, und dadurch, dass das Zahnrad (7) Zähne (15) besitzt, die auf der Peripherie der Antriebsvorrichtung (1) liegen.

4. Antriebsvorrichtung nach einem der Ansprüche 1 bis 3, **dadurch gekennzeichnet, dass** die Antriebsvorrichtung (1) mit der Welle (2) mittels einer Zahnwellenverbindung (12) verbunden ist und an einer radialen Fläche (14) des auf der Welle (2) montierten Gegenflansches (4) anliegt.

5. Antriebsvorrichtung nach einem der Ansprüche 1 bis 4, **dadurch gekennzeichnet, dass** die Servopumpe (19) eine Notfallservopumpe zum Steuern der Fahrzeugräder ist.

6. Fahrzeuggetriebe, das aufweist eine in einem Getriebegehäuse (5) montierte Welle (2), auf welcher Welle ein Zahnrad (7) nicht rotierbar montiert ist, wobei das Zahnrad (7) über Zahneingriff (16, 17) eine Fahrzeugservopumpe (19) durch eine Öffnung (20) in dem Getriebegehäuse (5) antreibt, worin das Zahnrad (7) integral mit einem Impulsrad (8) hergestellt ist, eine Antriebsvorrichtung(1) bildend, wobei das Impulsrad (8) Impulse zu einem tachometrischen Sensor (9) bereitstellt, **dadurch gekennzeichnet, dass** die Antriebsvorrichtung (1) angeordnet ist, um einen Gegenflansch (4), der auf der Welle (2) montiert ist, teilweise zu umgeben.

7. Getriebe nach Anspruch 6, **dadurch gekennzeichnet, dass** die Welle (2) eine Abtriebswelle in dem Getriebegehäuse (5) ist.

8. Getriebe nach einem der Ansprüche 6 oder 7, **dadurch gekennzeichnet, dass** das Impulsrad (8) Impuls bereitstellende Einrichtungen (21) besitzt, die auf der Peripherie der Antriebsvorrichtung (1) angeordnet sind, und dadurch, dass das Zahnrad (7) Zähne (15) besitzt, die auf der Peripherie der Antriebsvorrichtung (1) angeordnet sind.

9. Getriebe nach einem der Ansprüche 6 bis 8, **dadurch gekennzeichnet, dass** die Antriebsvorrichtung (1) mit der Welle (2) mittels einer Zahnwellenverbindung (12) verbunden ist und an einer radialen Fläche (14) des auf der Welle (2) montierten Gegenflansches (4) anliegt.

10. Getriebe nach einem der Ansprüche 6 bis 9, **dadurch gekennzeichnet, dass** die Servopumpe (19) eine Notfallservopumpe zum Steuern der Fahrzeugräder ist.

## Revendications

1. Dispositif d'entraînement pour une servo-pompe (19) destinée à un véhicule, ledit dispositif comprenant un engrenage (7), qui est joint de manière non rotative à un arbre (2) monté dans un carter (5) de boîte de vitesses et qui entraîne la servo-pompe (19) à travers une ouverture (20) pratiquée dans le carter (5) de boîte de vitesses, selon lequel l'engrenage (7) comprend de construction un anneau d'impulsions (8), qui envoie des impulsions à un capteur tachymétrique (9), **caractérisé en ce que** le dispositif d'entraînement (1) est disposé de manière à entourer partiellement un flasque d'arbre d'attaque (4) monté sur l'arbre (2).

2. Dispositif d'entraînement selon la revendication 1, **caractérisé en ce que** l'arbre (2) est un arbre de sortie dans le carter (5) de boîte de vitesses.

3. Dispositif d'entraînement selon l'une des revendications 1 ou 2, **caractérisé en ce que** l'anneau d'impulsions (8) a des moyens (21) pour fournir des impulsions qui sont disposés à la périphérie des moyens d'entraînement (1), et **en ce que** le pignon (7) a des dents (15) qui sont situées sur la périphérie du dispositif d'entraînement (1).

4. Dispositif d'entraînement selon l'une des revendications 1-3, **caractérisé en ce que** le dispositif d'entraînement (1) est relié à l'arbre (2) au moyen d'un joint à cannelures (2) et vient en butée contre une surface radiale (14) du flasque d'arbre d'attaque (4) monté sur l'arbre (2).

5. Dispositif d'entraînement selon l'une des revendications 1-4, **caractérisé en ce que** la servo-pompe (19) est une servo-pompe de secours pour diriger les roues du véhicule.

6. Boîte de vitesses pour véhicule, comprenant un arbre (2) monté dans un boîtier (5) de boîte de vitesses, un engrenage (7) étant monté sur ledit arbre de manière non rotative, ledit engrenage (7) entraînant une servo-pompe (19) de véhicule par l'intermédiaire d'un engagement (16, 17) denté à travers une ouverture (20) dans le boîtier (5) de la boîte de vitesses, selon laquelle l'engrenage (7) comporte de construction un anneau d'impulsions (8), formant un dispositif entraînement (1), ledit anneau d'impulsions (8) fournissant des impulsions à un capteur tachymétrique (9), **caractérisée en ce que** le dispositif d'entraînement (1) est disposé de manière à entourer partiellement un flasque d'arbre d'attaque (4) monté sur l'arbre (2).

7. Boîte de vitesses selon la revendication 6, **caractérisée en ce que** l'arbre (2) est un arbre de sortie dans le boîtier (5) de la boîte de vitesses.

8. Boîte de vitesses selon l'une des revendications 6 ou 7, **caractérisée en ce que** l'anneau d'impulsions (8) a des moyens (21) pour envoyer des impulsions disposées à la périphérie du dispositif d'entraînement (1) et **en ce que** l'engrenage (7) a des dents (15) qui sont disposées sur la périphérie du dispositif d'entraînement (1).

9. Boîte de vitesses selon l'une des revendications 6-8, **caractérisée en ce que** le dispositif d'entraînement (1) est relié à l'arbre (2) au moyen d'un joint à cannelures (12) et vient en butée contre une surface radiale (14) du flasque d'arbre d'attaque (4) monté sur l'arbre (2).

10. Boîte de vitesses selon l'une des revendications 6-9, **caractérisée en ce que** la servo-pompe (19) est une servo-pompe de secours pour diriger les roues du véhicule.
